# EUROPÄISCHE PATENTANMELDUNG

(11) **EP 0 795 526 A2**
(43) Veröffentlichungstag der Anmeldung: **17.09.1997**
(21) Anmeldenummer: 97104125.6
(22) Anmeldetag: 12.03.1997
(51) Int. Cl.: C05F 11/00, C05G 5/00, C05D 1/00, C05D 3/00, C05D 5/00, C05G 1/00

(54) **Düngemittel**

(30) Priorität: 15.03.1996 DE 19609941
(71) Anmelder: Brill, Holger, Dr. rer. nat., 22846 Norderstedt (DE)
(72) Erfinder: Brill, Holger, Dr. rer. nat., 22846 Norderstedt (DE); Kramper, Dieter, 21218 Seevetal (DE); Waitszeis, Peter, 21644 Wiegersen (DE)
(74) Vertreter: Hansmann, Dierk, Dipl.-Ing.

(57) **Zusammenfassung**

Das Düngemittel als Bodenverbesserer ist aus einer Mehrzahl von verschiedenen Bestandteilen zusammengesetzt. Der Hauptbestandteil des Düngemittel-Gemenges ist Laub. Der Anteil an Laub ist als Laubhydrolysat aufbereitet. Dadurch wird die natürliche Verrottungszeit des Laubes von mehreren Monaten bis Jahren auf einen Zeitraum von 15 bis 60 Minuten verkürzt. Auf diese Weise wird eine extrem kurze Herstellungszeit für das organisch-mineralische Düngemittel erreicht.

## Beschreibung

Die Erfindung betrifft ein aus einer Mehrzahl von Bestandteilen in partikulärer Form vorliegendes zusammengesetztes Düngemittel zur Bodenverbesserung, das organisches Material natürlicher Herkunft als Hauptbestandteil sowie gegebenenfalls einen Stickstoffträger enthält.

Düngemittel und Mittel zur Bodenverbesserung und Erhöhung der Bodenfruchtbarkeit von landwirtschaftlich genutzten Flächen sind aus der Praxis allgemein bekannt und erzielen zufriedenstellende bis gute Ergebnisse. In zunehmendem Maße versucht man auch Düngemittel mit Abfallstoffen zu ergänzen, um die Herstellung insgesamt wirtschaftlicher gestalten zu können und gleichzeitig Abfallstoffe günstig zu verarbeiten. So ist aus der EPA 445530 ein Düngemittel bekannt, dem ein Holz- und/oder Trestergranulat zugesetzt ist. Ein wesentlicher Nachteil besteht hier darin, daß Trester nicht in den gewünschten Mengen bereitstellbar ist.

Der Erfindung liegt nun die Aufgabe zugrunde ein Düngemittel zu schaffen, das mit hohem Wirkungsgrad einsetzbar sowie kostengünstig und in den oftmals gewünschten großen Mengen herstellbar ist.

Diese Aufgabe wird bei dem vorstehend angegebenen Düngemittel dadurch gelöst, daß das organische Material natürlicher Herkunft Laub ist.

Laub läßt sich problemlos und auf einfache und kostengünstige Weise verarbeiten und ist in großen Mengen vorhanden, da der Laubanfall in den Gemeinden sehr groß ist und deshalb schon Entsorgungsprobleme und Engpässe auf den Deponien entstehen. Der Laubanteil sollte zwischen 5-50 Gewichts-% des Gesamtgewichtes des Düngers ausmachen.

Vorteilhafterweise kann das als Hauptbestandteil für das Düngemittel-Gemenge vorgesehene Laub als Laub-Hydrolysat aufbereitet sein. Darüberhinaus ist das Düngemittel hervorragend als Torfersatz einsetzbar, wodurch die Umwelt geschont wird. Weiterhin können bei dem so bereitgestellten Düngemittel die Inhaltsstoffe als Nährstoffe verfügbar sein, und es ist zudem in einer sehr kurzen Produktionszeit herstellbar. Durch die Hydrolyse können praktisch unbegrenzte Mengen an Laub in kürzester Zeit umgesetzt werden und Düngemittel und/oder einem Torfsatz verarbeitet werden. Durch den Hydrolyseschnitt in der Produktion des erfindungsgemäßen Düngemittels bzw. Bodenverbesserungsmittels werden alle pflanzenpathogenen Bakterien und Pilze wie z.B. Bakterien der Gattungen Corynebacterium, Pseudomonas und Xanthomonas sowie bodenbürtige Pilze u.a. der Gattungen Ceratocystis, Fusarium, Verticiullium, Pythium, Phytophthora abgetötet. Damit ist eine Infektion der mit diesem Düngemittel oder Torfersatz beaufschlagten Pflanzungen durch bodenbürtige Mikroorganismen unterbunden, dieses gilt auch für tierische Schädlinge, wie beispielsweise die weiße Fliege.

Ein weiterer Vorteil der Hydrolysebehandlung ist, daß schwer verrottbares Laub wie z.B. von Eiche, Kastanie, Buche und von Nadelbäumen in sehr kurzer Zeit aufzuschließen ist. Weiterhin wurde überraschend gefunden, daß durch die Hydrolyse die im Laub vorhandenen Umweltgifte inaktiviert werden, da Biozide und andere Schadstoffe wie z.B. Insektizide und Pestizide mit dem Laub aus öffentlichen Anlagen und Parks eingeschleppt werden.

Das aus Laub bzw. Laub-Hydrolysat als Hauptbestandteil zusammengesetzte Düngemittel-Gemenge kann insbesondere als Granulat oder Pellet aus einer oder mehreren verschiedenen Laubarten bereitstellbar sein. Ein so ausgebildetes Düngemittel ist problemlos einsetz- und dosierbar und kann auf einfache Art gelagert werden.

Um die Hydrolysierzeit weiter zu verkürzen, und zwar um bis zu 75% (z.B. bei 140°C und 3-4 bar auf ca. 15-30 Minuten), kann ein weiterer Bestandteil des Düngemittels ein Harz natürlichen Ursprunges sein. So wird eine extreme kurze Herstellungszeit für das Düngemittel erreicht.

Zum verbesserten Aufschluß der Pflanzenbestandteile kann das Düngemittel Zusätze von Ca(OH)₂ und/oder Mg(OH)₂ und/der KOH umfassen.

Vorteilhafterweise kann dem Düngemittel nach der Hydrolyse des Laubes Sorbinsäure oder andere natürliche organische Säuren, wie z.B. Essigsäure oder Zitronensäure, zugesetzt werden. Durch die Zugabe von Sorbinsäure nach der Hydrolyse wird kein Schwefelwasserstoff (H₂S) mehr frei. Vielmehr reagiert H₂S mit Sorbinsäure zu Schwefelsorbat und wird auf diese Weise gebunden.

Im Laub sind ca. 2% Proteine enthalten. Proteine wiederum enthalten bestimmte Mengen der Aminosäure Cystein. Cystein besitzt einen Schwefelanteil von bis zu 30%. Die Art des Einbaues in hochmolekulare Naturstoffe bedingt bei der Einwirkung von Alkali gegenüber der freien Aminosäure eine erhöhte Instabilität. Bei diesen Aminosäuren (a-Disulfidcarbonsäure) erfolgt durch Alkali eine äußert leicht hydrolytische Aufspaltung der S-S-Bindung (durch die COOH-Gruppe) zu SH und Sulfensäure. Die Hydrolyse von Proteinen verläuft nicht nur in alkalischer Lösung, sondern auch im Physiologischen pH-Bereich.

Die bevorzugte Menge an Sorbinsäure pro 500 kg Hydrolysat liegt zwischen 10 und 30 kg.

Die Sorbinsäure wird aus den Früchten der Eberesche (Sorbus aucuparia) hergestellt. Es ist bekannt, daß Sorbinsäure gute konservierende Eigenschaften besitzt. Sie hemmt die für den Abbau von Nährstoffen notwendigen Enuzyme der Gruppe "Dehydrogenasen", die wichtig für das Wachstum der Schimmelpilze sind. Aus diesem Grund können sich weder Schimmelpilze noch Bakterien in dem Endprodukt bestehend aus Pellets oder Granulat vermehren. Die Folge davon ist eine ausgezeichnete Lagerstabilität, da Schimmelbildung und Fäulnis durch Bakterien verhindert wird.

Selbstverständlich ist es auch möglich, synthetisch hergestellte Sorbinsäure als Zusatz für den erfindungsgemäßen Dünger zu verwenden.

Um den Stickstoffgehalt, der im Laub und anderen Pflanzenmaterialien bei etwa 0,3% liegt, zu erhöhen, können dem Hydrolysat Stickstoffträger hinzugefügt werden. Dieses können z.B. Hühnereiweiß, Hornmehl, Grünmehl, Fischmehl, Fleischmehl...

Durch eine Mischung des Laubhydrolysates mit Bentonit, Montmorrilonit, Sägespänen, Holzmehl, Holzgranulat, Holzhächsel und mineralischen Düngestoffen kann ein organisch-mineralischer Dünger erzeugt werden, der pelletiert, granuliert und kompaktiert werden kann. Dieses Düngemittel ist aufgrund seiner Produktionstechnik fest, staubfrei und über eine lange Zeit gut lagerfähig.

Die N:P:K-Verhältnisse sind praktisch beliebig einstellbar. Durch entsprechende Formulierung mit Balsamharz können Lang- und Kurzzeitdüngemittel hergestellt werden, die entsprechend der Bedürfnisse der Pflanzen die Nährstoffe langsamer oder schneller abgeben.

### Beispiel 1:

Rhododendron- und Tannendünger
(N:P:K:Mg=6:4:8:2)
- 20,0 kg: Diammoniumphosphat
- 6,5 kg: Harnstoff (46%ig)
- 16,0 kg: Kaliumsulfat
- 1,0 kg: Bentonit
- 10,0 kg: Magnesiumsulfat
- 5,0 kg: Calciumsulfat
- 0,1 kg: Stearin
- 41,4 kg: Laubhydrolysat

### Beispiel 2:

Rosen- und Erdbeerdünger
(N:P:K:Mg=8:8:8:2)
- 40,0 kg: Diammoniumphosphat
- 8,0 kg: Obsttrester
- 4,5 kg: Harnstoff (46%ig)

### Beispiel 5:

Calcium-Magnesium-Pufferdünger (Bodenverbesserer)
- 10,0 kg: Magnesiumsulfat
- 60,0 kg: Calsiumcarbonat
- 0,1 kg: Stearin
- 10,0 kg: Holzgranulat
- 19,9 kg: Laubhydrolysat/Laubgemisch

## Patentansprüche

1. Aus einer Mehrzahl von Bestandteilen zusammengesetztes, in partikulärer Form vorliegendes Düngemittel zur Bodenverbesserung, das organisches Material natürlicher Herkunft als Hauptbestandteil sowie gegebenenfalls einen Stickstoffträger enthält, dadurch gekennzeichnet, daß das organische Material natürlicher Herkunft Laub ist.

2. Düngemittel nach Anspruch 1, dadurch gekennzeichnet, daß das Laub als Laubhydrolysat aufbereitet ist, wobei das Düngemittel gegebenenfalls ein Harz natürlichen Ursprunges enthält, das bei der Durchführung der Hydrolyse des Laubes als Beschleuniger zugesetzt wurde.

3. Düngemittel nach einem der Ansprüche 1 oder 2, dadurch gekennzeichnet, daß es zum verbesserten Aufschluß der Pflanzenbestandteile Ca(OH)₂ und/oder Mg(OH)₂ und/oder KOH enthält.

4. Düngemittel nach einem der Ansprüche 1 bis 3, dadurch gekennzeichnet, daß dem Düngemittel nach der Hydrolyse des Laubes Sorbinsäure, insbesondere aus Früchten der Eberesche (Sorbus aucuparia), oder andere organische Säuren zugesetzt sind.
